# EUROPEAN PATENT APPLICATION

(11) **EP 1 113 612 A2**
(43) Date of publication of application: **04.07.2001**
(21) Application number: 00308902.6
(22) Date of filing: 10.10.2000
(51) Int. Cl.: H04J 3/16, H04J 3/06, H04J 3/14

(54) **Transmission of additional data in a SDH network**

(30) Priority: 14.10.1999 US 418219
(71) Applicant: ECI Telecom Ltd., Petach Tikva 49517 (IL)
(72) Inventor: Halevi, Ilan, Petach-Tikva 49382 (IS)
(74) Representative: Potter, Julian Mark

(57) **Abstract**

A method for transmitting an additional bit stream via a synchronous network by which the additional bit stream is introduced into a byte operative in the process of pointer justification, at periods wherein that byte is not occupied with virtual container data resulting from a justification event.

## Description

The present invention relates to telecommunications and, more particularly, but not exclusively, to the transmission of information to and from a synchronous type of network.

One of the problems associated with synchronous type of networks, is the need to allow for justification of frequency offsets occurring between a system transmitting the information and a system receiving and forwarding that information. ITU-T Standard Recommendation G.707, entitled "Network node interface for the synchronous digital hierarchy (SDH)" which is hereby incorporated by reference, provides, among others, solutions to the question of how to handle such offsets. In accordance with the solution provided by the G.707 Recommendation, the pointer value is incremented or decremented as needed so as to overcome the offsets between the frame rate of the AU-n and that of the VC-n. The change in the pointer value is accompanied by a corresponding positive or negative justification byte or bytes. Also, consecutive pointer operations are defined to be separated, by at least three frames (i.e. every fourth frame) in which the pointer value remains constant.

If the frame rate of the VC-n is too slow with respect to that of the AU-n, then the alignment of the VC-n must periodically slip back in time and the pointer value must be incremented by one. Three positive justification bytes, comprising no traffic data, appear in the AU-4 frame containing inverted I-bits in the H1 and H2 bytes, immediately after the last H3 byte. Subsequent pointers will contain the new offset.

For AU-3 frames, a positive justification byte, comprising no traffic data, appears immediately after the individual H3 byte of the AU-3 frame containing inverted I-bits in the H1 and H2 bytes. In such a case, the subsequent pointers will contain the new offset, too.

If the frame rate of the VC-n is too fast with respect to that of the AU-n, then the alignment of the VC-n must periodically be advanced in time and the pointer value must be decremented by one. In this case, three negative justification bytes, comprising valid traffic data, appear in the AU-4 frame containing inverted D-bits in the H1 and H2 bytes, in the H3 bytes. Subsequent pointers will contain the new offset. For AU-3 frames, a negative justification byte, containing valid traffic data, appears in the individual H3 byte of the AU-3 frame containing inverted D-bits in the H1 and H2 bytes. Subsequent pointers will contain the new offset. Although the G.707 Recommendation specifies that consecutive pointer operations are separated by at least three frames, still under most extreme operating conditions allowed by that Recommendation, this type of operation is carried out for example only once per about 850 frames of TU-12 signals or 140-160 frames of VC-4 signals. Naturally, the occurrence of a justification event under normal operating conditions is more seldom than specified above. However, the user does not use that byte (or bytes in the case of VC-4 for example), as it is reserved for justification purposes.

At least one embodiment of the present invention seeks to provide a method for the transmission of information in addition to that defined for synchronous type networks.

At least one embodiment of the invention seeks to provide a device and a system adapted to allow transmission of additional bit stream via a synchronous type of network.

Other aspects of the invention will become apparent as the description of the invention proceeds.

In one aspect of the present invention there is provided a method for transmitting a bit stream via a synchronous network, characterized in that said bit stream is introduced into a byte operative in the process of pointer justification, at periods wherein said byte is not occupied with virtual container data resulting from a justification event. Examples of such a synchronous network are SDH, SONET and the like.

The term "virtual container data" will be used herein to denote data substantially originated at or transmitted towards the tributary ends of the synchronous network.

The term "additional bit stream" is used herein to denote a non-"virtual container data" type of information such as data (e.g. encoded voice, encoded video, modulated signals, etc.), control information, signaling and the like.

According to a preferred embodiment of the present invention, the method is provided for transmitting additional bit stream to and/or from an SDH or SONET network over an HDSL link comprising at least one negative justification byte and at least one positive justification byte. An example of such a link is one carrying TU-12 signals, and the like.

According to yet another preferred embodiment the additional bit stream comprises control data.

By still a further embodiment of the invention the additional bit stream is transmitted at a nominal rate of 16 kbit/s.

Typically, a synchronous system comprises at least one negative justification byte and at least one positive justification byte. The negative justification byte(s) is (are) used for carrying stuffing bits whereas the positive justification byte(s) is (are) used for carrying virtual container data. In such systems, where the negative justification byte(s) is (are) not used for justification purposes, it (they) may be utilized as was previously explained, for the transmission of a byte(s) of the additional bit stream. If the positive justification byte(s) is (are) currently used for justification purposes, the positive justification byte(s) as well as the negative justification byte(s) may be utilised in accordance with aspects of the present invention for the transmission of a byte of the additional bit stream. In the case that none of the justification bytes are being used for the purpose of justification, only the negative justification byte(s) may be utilized for the transmission of a byte(s) of the additional bit stream.

In accordance with yet another preferred embodiment of the present invention, the method further comprises a step of identifying in each frame whether a byte of the additional bit stream can be inserted into the byte operative in the process of pointer justification, e.g. when said negative justification byte is not being occupied with virtual container data resulting from a negative justification event. More preferably, the identification is carried out by examining the pointers of the synchronous network. If the negative justification byte is currently occupied with virtual container data resulting from a negative justification event, the information belonging to the additional bit stream is not inserted, and consequently, would not be read at the receiving end. However, if that byte is not being utilized for the transmission of virtual container data resulting from a negative justification event, a byte of the additional bit stream such as control information may be transmitted utilizing that byte. In this latter case, the transmitted information would be read at the receiving end.

According to still another embodiment of the present invention, the additional bit stream is inserted in the justification opportunity byte along with the transmission of signals selected from the group comprising TU-12 signals, TU-11 signals, TU-3 signals, VT1 signals, VT2 signals, AU-3 signals, AU-4 signals, and the like.

According to another aspect of the invention, there is provided a device operative for transmitting a bit stream via a synchronous network, characterized in that said bit stream is introduced into a byte operative in the process of pointer justification, at periods wherein said byte is not occupied with virtual container data resulting from a justification event.

In accordance with an embodiment of the present invention, the device further comprises determination means operative to determine whether the byte used for the purpose of pointer justification is currently occupied with virtual container data resulting from a justification event, or not.

According to yet another aspect of the invention, there is provided a system comprising an HDSL link connecting a synchronous communication network and a network termination element, adapted to transmit over the HDSL link a bit stream that is adapted to be introduced into a byte used for the purpose of pointer justification, at periods wherein said byte is not occupied with virtual container data resulting from a justification event.

In accordance with an embodiment of the present invention, the system further comprises determination means operative to determine whether the byte used for the purpose of pointer justification is occupied with virtual container data resulting from a justification event, or not.

Embodiments in accordance with the invention will now be described, by way of example only, and with reference to the accompanying drawings, in which:
- Fig. 1.: AU-n/TU-3 pointer (H1, H2, H3) coding in accordance with ITU-T Recommendation G.707;
- Fig. 2A to 2D: illustrate the solution provided by G.707 for AU-4 pointer adjustment operation, wherein

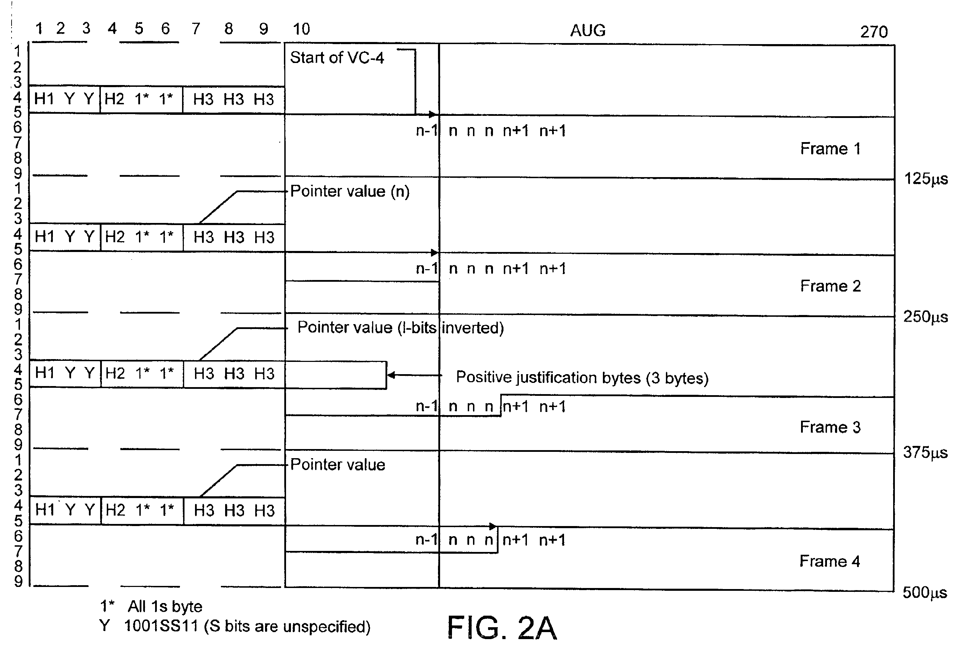

- Fig. 2A: presents AU-4 pointer adjustment operation - positive justification;

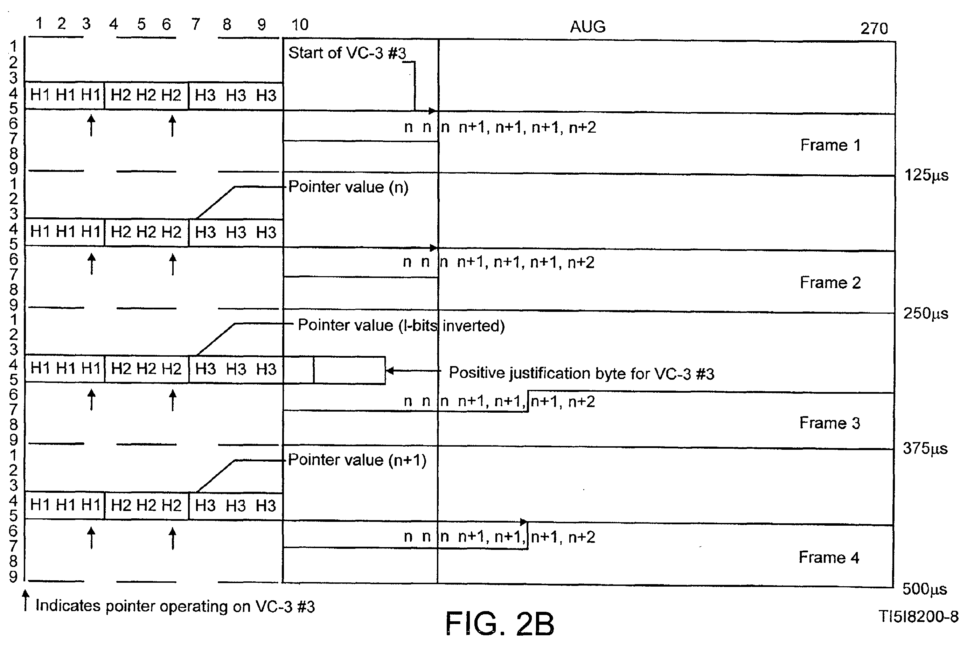

- Fig. 2B: presents AU-3 pointer adjustment operation - positive justification;

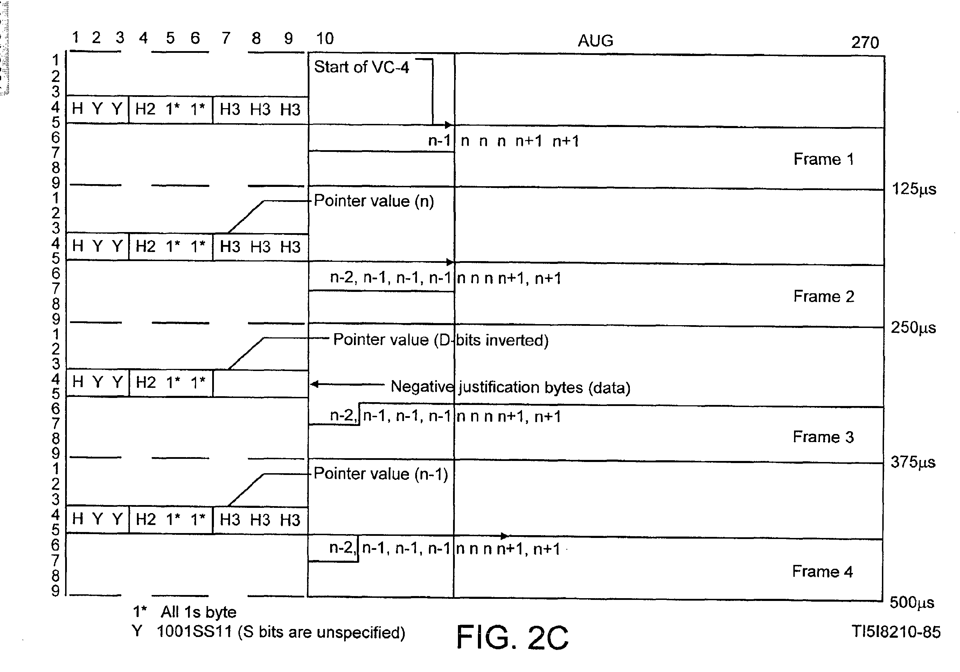

- Fig. 2C: presents AU-4 pointer adjustment operation - negative justification; and

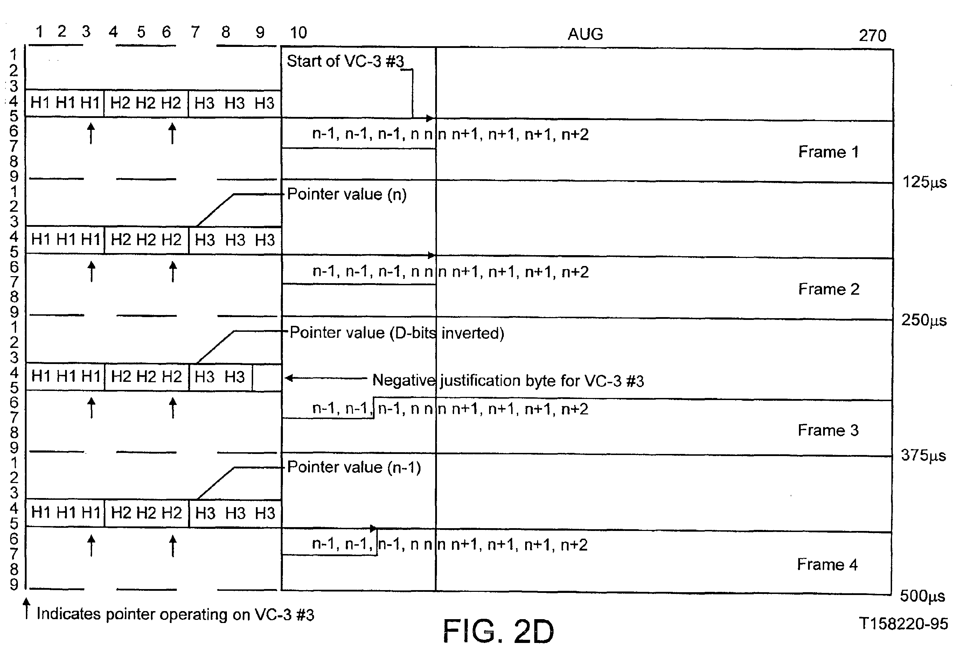

- Fig. 2D: presents AU-3 pointer adjustment operation - negative justification;

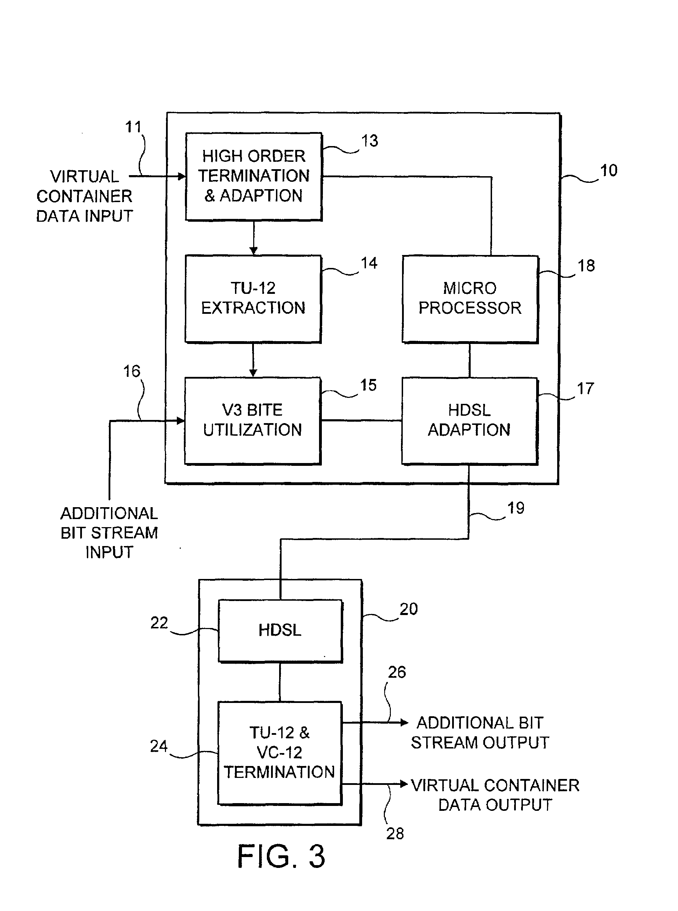

- Fig 3: demonstrates an example of an embodiment of the invention showing an HDSL link connecting an SDH network to a network termination;

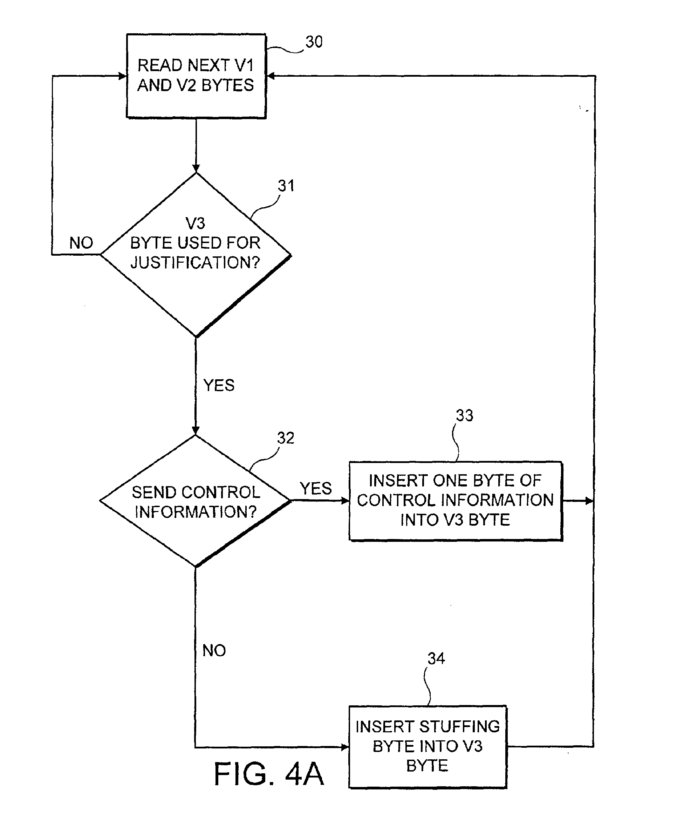

- Fig 4A: illustrates a flow chart of a decision process in accordance with an embodiment of the present invention, for implementing a control channel at the SDH network side of the HDSL link; and

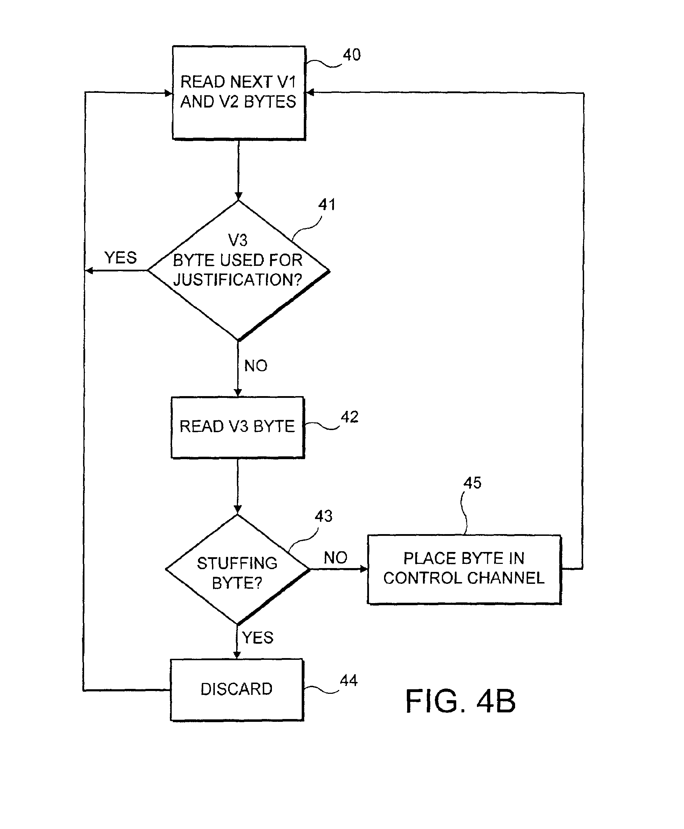

- Fig 4B: illustrates a flow chart of a decision process in accordance with an embodiment of the present invention, for implementing a control channel at the network termination side of the HDSL link.

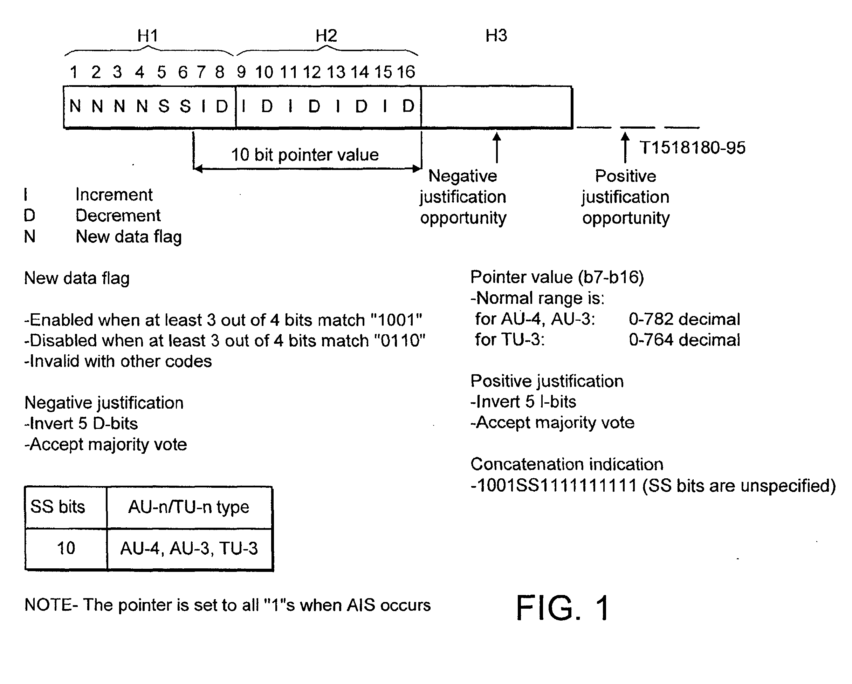

The pointer contained in bytes H1 and H2 of the SDH frame, designates the location of the byte where the VC-n begins. The two bytes allocated to the pointer function can be viewed as one word as shown in Figure 1. The last ten bits (bits 7-16) of the pointer word carry the pointer value.

As illustrated in Fig. 1, the AU-4 pointer value is a binary number with a range of 0 to 782 there are three AU-3s in the AU-4, each AU-3 has its own associated H1, H2 and H3 bytes. The first H1, H2, H3 set refers to the first AU-3, and the second set to the second AU-3, and so on. For the AU-3s, each pointer operates independently. In all cases, the AU-n pointer bytes are not counted in the offset. For example, in an AU-4, the pointer value of 0 indicates that the VC-4 starts in the byte location that immediately follows the last H3 byte, whereas an offset of 87 indicates that the VC-4 starts three bytes after the K2 byte.

As previously explained, if there is a frequency offset between the frame rate of the AU-n and that of the VC-n, then the G.707 Recommendation defines that pointer value will be incremented or decremented as needed, accompanied by a corresponding positive or negative justification byte or bytes. If the frame rate of the VC-n is too slow with respect to that of the AU-n, then the alignment of the VC-n must periodically slip back in time and the pointer value must be incremented by one. This operation is indicated by inverting bits 7, 9, 11, 13 and 15 (I-bits) of the pointer word to allow 5-bit majority voting at the receiver. Three positive justification bytes, comprising no traffic data, appear immediately after the last H3 byte in the AU-4 frame containing inverted I-bits. Subsequent pointers will contain the new offset. This is illustrated in Fig. 2A.

For AU-3 frames, a positive justification byte, comprising no traffic data, appears immediately after the individual H3 byte of the AU-3 frame containing inverted I-bits. Subsequent pointers will contain the new offset. This is illustrated in Fig. 2B.

However, If the frame rate of the VC-n is too fast with respect to that of the AU-n, then the alignment of the VC-n must periodically be advanced in time and the pointer value must be decremented by one. This operation is indicated by inverting bits 8, 10, 12, 14 and 16 (D-bits) of the pointer word to allow 5-bit majority voting at the receiver. Three negative justification bytes, comprising VC-n data, appear in the H3 bytes in the AU-4 frame containing inverted D-bits. Subsequent pointers will contain the new offset. This is illustrated in Fig. 2C. For AU-3 frames, a negative justification byte, comprising VC-n data, appears in the individual H3 byte of the AU-3 frame containing inverted D-bits. Subsequent pointers will contain the new offset. This is illustrated in Fig. 2D.

An example of implementing the method provided by the present invention is presented in Fig. 3. In this example, control information is transmitted via a link connecting an SDH network and an HDSL network. In the Figure, an SDH network element 10 is connected to a Network Termination element (NT) 20 via link 19. While SDH network element 10 is shown in Fig. 3 has having only one connection to an SDH network, via link 11, it is to be understood that element 10 may be connected to an optical ring or other network topology, and should be considered as not being limited to a single connection. The higher order SDH signal received, is terminated by SDH termination and adaptation element 13, which serves to extract among others, lower level signals. The lower level signal may contain for example the TU-12 as defined in ITU-T G.707. The TU-12 contains the VC-12 virtual container which is defined in the above mentioned standard, and a tributary unit pointer which indicates the offset of the payload frame start relative to the pointer byte position. While embodiments of the invention are exemplified herein in relation to an SDH network and a TU-12 tributary, the invention should not be considered as being restricted to this example.

The TU-12 signal is extracted in TU-12 extraction element 14, and is time synchronized with the originating SDH network element (not shown in the Figure), which is not necessarily fixed in relation to the SDH network element 10 and any frequency difference will result in pointer justification in the TU-12 signal. A justification procedure in which V3 byte of TU-12 is used, is described by ITU-T recommendation G.707 dated March 1996. The extracted TU-12 signal is transmitted to element 15 wherein the pointer information contained in the V1 and V2 bytes is read, and the availability of the V3 byte is determined. Element 15 may also receive control information via channel 16, destined for NT element 20. This information may either be generated locally, or elsewhere in the SDH network. The operation of all the elements in the SDH network element 10 is controlled by microcomputer 18. As previously explained and in accordance with aspects of the present invention, the transmitted information is not limited to control information nor to such information transmitted via a control channel, but for the sake of simplicity, is demonstrated here as such.

Fig. 4A illustrates a block diagram of a logic followed by microcomputer 18, which diagram describes the operation of element 15 shown in Fig. 3. In step 30, V1 and V2 bytes are read to determine if the V3 byte is occupied with negative justification procedure, or is available for the transmission of an additional bit stream, the control data in the present example. The actual determination of V3 byte availability referred above, is carried out in step 31. In the case that the determination is that V3 byte is unavailable, no control information is transmitted, and the procedure is repeated (from step 30) in the next frame. However, if V3 byte is available, the process proceeds to step 33 for the insertion of the control data. In the process, it is determined in step 32 whether control information is to be transmitted. If control information is to be transmitted, then in the next step, 33, the control information is inserted into V3 byte. Otherwise, stuffing information is inserted into that V3 byte (step 34).

Reverting now to Fig. 3, the TU-12 with the stuffed V3 byte as just explained, is transferred to HDSL adaptation element 17 which transfers the data over the HDSL link 19 to NT element 20. This part of the process may be implemented in accordance with the ETSI Recommendation previously mentioned, or through any other method which enables mapping the TU-12 signal into the HDSL core. The HDSL data is recovered in HDSL element 22, which typically also functions to recover the clock timing. The clock timing recovered is synchronized with SDH network 19, and thus data transmitted from NT element 20 to SDH termination element 10 will not exhibit any wander. The TU-12 data recovered from the HDSL link, is than transmitted to TU-12 termination element 24, which recovers the original VC-12 data, and also functions to format information generated by the NT element 20 into a VC-12 for transmission towards the SDH network via link 19. Since the NT element 20 is synchronized with SDH termination element 10 and the SDH network connected thereto, there is no need for justification due to wander, and the V3 byte may be used for a control channel in all frames being sent from NT element 20 towards network element 10. For TU-12 signals received by termination element 24, the flow chart schematically illustrated in Fig. 4B may be utilized to place valid control data received into the control channel in NT element 20.

Referring to Fig. 4B, there is shown a detailed flow chart that can be used for extracting the control bytes in the TU-12. V1 and V2 bytes are read in step 40, and a determination is made in step 41 whether the V3 byte is used as a justification byte. It is to be noted that this is a relatively rare occurrence, caused typically only by timing differences between networks. If the V3 byte is used for justification purposes, the program returns to step 40 and awaits the next frame. If the V3 byte is not used for justification, the program then (in step 42) reads the V3 byte, and determines in step 43 whether the byte was used for stuffing or whether it contains control information. In the first case, the stuffing bits are discarded (step 44), whereas in the latter case (step 45), the information is inserted in control channel.

As previously explained, embodiments of the invention have been described with reference to an SDH system, an HDSL link, a TU-12 signal, and the transmission of control information in such a set-up. However, it will be appreciated by anyone skilled in the art that many other variations are encompassed by the present invention. Such variations may be a SONET system, a TU-11 signal, a VT2 signal, a VT1.5 signal, an ADSL link, transmission of any required information, not exclusively control information, may be selected without departing from the scope encompassed by the present invention.

It will be appreciated that the above described methods may be varied in many ways, including, changing the order of steps, and the exact implementation used. It should also be appreciated that the above described description of methods and apparatus are to be interpreted as including apparatus for carrying out the methods and methods of using the apparatus.

The present invention has been described using non-limiting detailed descriptions of preferred embodiments thereof that are provided by way of example and are not intended to limit the scope of the invention. It should be understood that features described with respect to one embodiment may be used with other embodiments and that not all embodiments of the invention have all of the features shown in a particular figure. Variations of embodiments described will occur to persons of the art. Furthermore, the terms "comprise," "include," "have" and their conjugates, shall mean, when used in the claims, "including but not necessarily limited to." The scope of the invention is limited only by the following claims.

Insofar as embodiments of the invention described above are implementable, at least in part, using a software-controlled programmable processing device such as a Digital Signal Processor, microprocessor, other processing devices, data processing apparatus or computer system, it will be appreciated that a computer program for configuring a programmable device, apparatus or system to implement the foregoing described methods is envisaged as an aspect of the present invention. The computer program may be embodied as source code and undergo compilation for implementation on a processing device, apparatus or system, or may be embodied as object code, for example. The skilled person would readily understand that the term computer in its most general sense encompasses programmable devices such as referred to above, and data processing apparatus and computer systems.

Suitably, the computer program is stored on a carrier medium in machine or device readable form, for example in solid-state memory or magnetic memory such as disc or tape and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A method for transmitting an additional bit stream via a synchronous network comprising at least one positive pointer justification byte and at least one negative justification byte, characterized in that said additional bit stream is introduced into a byte operative in the process of pointer justification, at periods wherein said byte is not occupied with virtual container data resulting from a justification event.

2. A method according to Claim 1, wherein said synchronous network is an SDH network.

3. A method according to Claim 1, wherein said synchronous network is a SONET network.

4. A method according to any one of the preceding Claims, wherein said byte operative in the process of pointer justification is a negative pointer justification byte.

5. A method according to Claim 1, wherein said synchronous network is connected to an HDSL link.

6. A method according to Claim 5, wherein said HDSL is operative to carry TU-12 signals.

7. A method according to Claim 1, further comprising a step of identifying whether at least one byte of the additional bit stream can be inserted into the bytes operative in the process of pointer justification.

8. A method according to claim 7, wherein said step of identification comprises the examining of the pointers of said synchronous network to retrieve information whether said byte operative in the process of pointer justification is currently occupied with virtual container data resulting from a justification event.

9. A method according to claim 1, wherein said bit stream is transmitted along a transmission path adapted to allow transmission of signals of the type selected from the group comprising TU-12 signals, TU-11 signals, TU-3 signals, VTI signals, VT2 signals, AU-3 signals, and AU-4 signals.

10. A device operative for transmitting an additional bit stream via a synchronous network comprising at least one positive pointer justification byte and at least one negative justification byte, characterized in that said bit stream is introduced into a byte operative in the process of pointer justification, at periods wherein said byte is not occupied with virtual container data resulting from a justification event.

11. A device according to Claim 10, further comprising determination means operative to determine whether the byte used for the purpose of pointer justification is currently occupied with virtual container data resulting from a justification event, or not.

12. A system comprising an HDSL link comprising at least one negative justification byte and at least one positive justification byte and connecting a synchronous communication network and a network termination element, adapted to transmit over said HDSL link an additional bit stream that is adapted to be introduced into a byte used for the purpose of pointer justification, at periods wherein said byte is not occupied with virtual container data resulting from a justification event.

13. A system according to Claim 12, further comprising determination means operative to determine whether the byte used for the purpose of pointer justification is occupied with virtual container data resulting from a justification event.

14. A program comprising machine- or computer-readable program elements for implementing any one of claims 1 to 9.

15. A program comprising machine- or computer-readable program elements translatable for implementing any one of claims 1 to 9.

16. A carrier medium, carrying a program according to claim 14 or 15.
